# EUROPÄISCHE PATENTSCHRIFT

(11) **EP 0 761 486 B1**
(45) Veröffentlichungstag und Bekanntmachung des Hinweises auf die Patenterteilung: **15.11.2000**
(21) Anmeldenummer: 96111921.1
(22) Anmeldetag: 24.07.1996
(51) Int. Cl.: B60K 15/04

(54) **Betankungsanordnung zum roboterfähigen Betanken mit Kraftstoff**
Filling device for robot capable filling of fuel
Dispositif de remplissage apté à remplir le carburant avec robot

(30) Priorität: 05.09.1995 DE 19532777
(43) Veröffentlichungstag der Anmeldung: 12.03.1997
(73) Patentinhaber: DaimlerChrysler AG, 70567 Stuttgart (DE)
(72) Erfinder: Steinkämper, Reinhard, 71364 Winnenden (DE); Kremer, Adolf, 71686 Remseck (DE)

(56) Entgegenhaltungen:
- EP-A- 0 612 639

## Beschreibung

Die Erfindung betrifft eine Betankungsanordnung gemäß dem Oberbegriff des Patentanspruches 1.

Eine gattungsgemäße Betankungsanordnung ist aus der EP 0 612 639 A1 bekannt. Diese beinhaltet dort eine robotergeführte Zapfpistole und einen an einem Verschluß für den Tankeinfüllstutzen eines Kraftfahrzeuges angeordneten Andockaufsatz, der hohlzylindrisch ausgebildet ist und eine Innenverzahnung besitzt, in die eine am austrittsseitigen Ende des Füllrohres der Zapfpistole umfänglich ausgebildete Außenverzahnung beim Andocken formschlüssig eingreifen kann, so daß durch Verdrehen des Andockaufsatzes über die Zapfpistole ein Öffnen des Verschlußes herbeigeführt und eine abrutschsichere Halterung der Zapfpistole am Kraftfahrzeug im Andockzustand gewährleistet werden kann. Ein derartiges Andocken ist dabei jedoch nur dann möglich, wenn die Zapfpistole mit ihrer Verzahnung exakt mit der geeigneten Winkelstellung zur Verzahnung des Andockaufsatzes geführt wird. Dies ist nur mit einer teueren und sehr aufwendigen Sensorik und einer mit dieser verbundenen hochpräzisen Steuerung für die Zapfpistole möglich. Bei Verzicht auf eine derartige Sensorik und Steuerung ist die Wahrscheinlichkeit groß, daß die Zähne der zapfpistolenseitigen Verzahnung des Betankungsroboters beim Andockvorgang nicht in die Lücken der Verzahnung im Andockaufsatz treffen, sondern vielmehr mit dessen Zähnen aufeinanderstoßen. Der Roboter, der ohne geeignete zusätzliche Sensorik die Fehlstellung nicht erkennt, schiebt die Zapfpistole weiter gegen den Einfüllstutzen, was zu Beschädigungen am Einfüllstutzen und zu einem Wegschieben des Fahrzeuges führen kann. Zwar kann die Wahrscheinlichkeit dieses Falles, d.h. des Auftreffens der Verzahnungsköpfe aufeinander durch einer beiderseitige sehr feine Verzahnung mit angespitzten minimiert werden. Eine derartige Verzahnung ist jedoch schmutzempfindlich und durch Abnutzung störanfällig. Ebenfalls können beim Verlassen des Fahrzeuges während des Betankungsvorganges durch einen Fahrzeuginsassen Schaukelbewegungen bei dem besagten Fahrzeug auftreten, die zu einer Trennung der beiden Verzahnungen führen und den Betankungsvorgang abrupt und ungewollt unterbrechen, wobei gegebenenfalls aus der Zapfpistole Kraftstoff in die Umgebung frei ausfließen kann.

Der Erfindung liegt die Aufgabe zugrunde, eine gattungsgemäße Betankungsanordnung dahingehend weiterzubilden, daß in einfacher Weise ein zu jeder Zeit funktionssicheres und behinderungsfreies Andocken der Zapfpistole am Einfüllstutzen des Fahrzeugkraftstofftankes für eine Betankung erreicht wird.

Die Aufgabe ist erfindungsgemäß durch die im Patentanspruch 1 angegebenen kennzeichnenden Merkmale gelöst.

Dank der Erfindung wird die zum Verschwenken des Verschlußdeckels des Einfüllstutzens notwendige formschlüssige Verbindung zwischen Zapfpistole und Einfüllstutzen anstatt durch Verzahnung durch radial flexible Formschlußelemente bewirkt, die in Andocklage in Gegenformschlußelemente bildende Aussparungen an der Zapfpistole und/oder dem Andockaufsatz formschlüssig eingreifen, wobei im Falle einer anfänglichen Fehllage der radial verstellbaren Formschlußelemente zu den starr angeordneten Formschlußelementen, bei der sich kein Formschluß ergibt, durch eine geringe Drehung um die körpereigene Achse die Raststellung und damit die sichere Ankoppellage erreicht wird. Der geringe Tordieraufwand macht sich besonders bei der robotergeführten Zapfpistole mit den an sie angeschlossenen Kraftstoffschläuchen dahingehend günstig bemerkbar, daß Torsionen der Zapfpistole in größerem Umfang verhindert werden, die sonst zu erheblichen Funktionsstörungen bei der Betankung durch eventuelles Abknicken der Kraftstoffschläuche führen würden. Verschmutzungen am Andockaufsatz oder an der Zapfpistole können das Andocken nicht mehr behindern, da die verstellbaren Formschlußelemente federelastisch radial ausweichen können und in radialer Richtung ein Formschluß der verstellbaren mit den starren Formschlußelementen erzielt wird. Somit wird insgesamt in relativ einfacher Weise ein unabhängig von der relativen Winkellage der Zapfpistole zum Einfüllstutzen verlaufendes behinderungsfreies Andocken ermöglicht wird. Durch die in der Raststellung in Axial- und Umfangsrichtung bewirkte Verriegelung der Zapfpistole am Einfüllstutzen wird gleichzeitig einer unerwünschte axiale Entkopplung von Zapfpistole und Einfüllstutzen bei Schaukelbewegungen des Fahrzeuges verhindert und somit eine funktionssichere Ankopplung erzielt. Da die verstellbaren Formschlußelemente von einer Vorspannfeder unterstützt sind, treten in der Andocklage keine Verzwängungen auch beim Auftreffen auf einen Verzahnungskopf der starr angeordneten Formschlußelemente auf. Vorteilhaft ist desweiteren, daß die funktionssichere und behinderungsfreie Ankopplung in einfacher Weise ohne von außen eingreifende Hilfsmittel lediglich durch die axiale Einführbewegung der Zapfpistole in den Einfüllstutzen, bzw. den Andockaufsatz zustande kommt.

Zweckmäßige Ausgestaltungen der Erfindung können den Unteransprüchen entnommen werden; im übrigen ist die Erfindung anhand mehrerer in der Zeichnung dargestellter Ausführungsbeispiele nachfolgend näher erläutert; dabei zeigt:
Fig. 1 die erfindungsgemäße Betankungsanordnung abschnittsweise in einem seitlichen Längsschnitt sowohl vor der Eintauchbewegung als auch in Andocklage mit einer umfangsseitigen Außenverzahnung des austrittseitigen Endes der Zapfpistole und mit im Andockaufsatz angeordneten als Bolzen ausgebildeten verstellbaren Formschlußelementen,
Fig. 2 eine Draufsicht auf einen Querschnitt der Anordnung aus Fig. 1 in der Eintauchbewegung der Zapfpistole,
Fig. 3 abschnittsweise die erfindungsgemäße Anordnung in Andocklage der Zapfpistole mit an dieser angeordneten zusammendrückbaren verstellbaren Formschlußelementen, die vom Innenraum der Zapfpistole aus betätigbar sind, in unbetätigtem Zustand in einem seitlichen Längsschnitt,
Fig. 4 die Anordnung aus Fig. 3 in betätigtem Zustand der Formschlußelemente in einem seitlichen Längsschnitt,
Fig. 5 die Anordnung aus Fig. 4 in einem Schnitt entlang der Linie V-V,
Fig. 6 abschnittsweise die erfindungsgemäße Anordnung in Andocklage der Zapfpistole mit an dieser angeordneten nicht-zusammendrückbaren verstellbaren Formschlußelementen, die vom Innenraum der Zapfpistole aus betätigbar sind, in betätigtem Zustand und eine als Gegenformschlußelemente ausgebildete, breitlückige Innenverzahnung am Andockaufsatz in einem seitlichen Längsschnitt,
Fig. 7 die Anordnung aus Fig. 6 in einem Schnitt entlang der Linie VII-VII,
Fig. 8 abschnittsweise die erfindungsgemäße Anordnung in Andocklage der Zapfpistole mit an dieser angeordneten verstellbaren Formschlußelementen in Eingriff mit einer am Andockaufsatz angeordneten Führungsnut gemäß eines Bajonettverschlußes in Raststellung in einem seitlichen Längsschnitt,
Fig. 9 die Anordnung aus Fig. 8 in einem Schnitt entlang der Linie IX-IX.

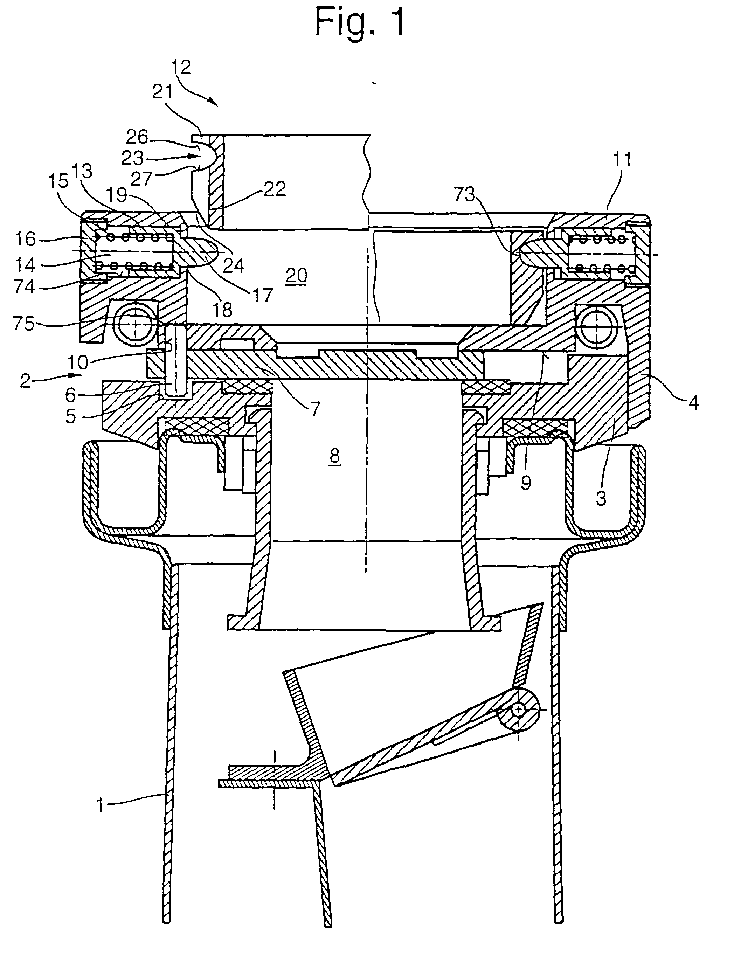

In Fig. 1 ist ein Einfüllstutzen 1 eines Kraftstofftankes eines Kraftfahrzeuges dargestellt, der mit einem bajonettartig auf ihm aufgeschraubten Verschlußdeckel 2 verschlossen ist. Der Verschlußdeckel 2 besteht im wesentlichen aus zwei Ringkörpern 3,4, wobei der Verschlußdeckel 2 mit dem Ringkörper 3 am Einfüllstutzen 1 verschraubt ist. Im Ringkörper 3 ist oberseitig eine vertikal angeordnete Drehachse (in der Zeichnung nicht sichtbar) für einen horizontal verschwenkbaren und mit der Achse fest verbundenen Schwenkschiebers 7 vorgesehen, der einen zentralen Einlaßkanal 8 des Ringkörpers 3 dichtend verschließt. Der Ringkörper 4 ist auf dem Ringkörper 3 oberseitig um die körpereigene Achse verdrehbar gelagert und weist an seiner Unterseite 9 randnah eine Aufnahme 10 auf, in die ein Mitnahmestift 6 für den Schwenkschieber 7 mit seinem oberen Ende 75 im Pressitz eingreift. Der Mitnahmestift 6 bewegt über eine Verdrehung des Ringkörpers 4 den Schwenkschieber 7 in Umfangsrichtung von einer Öffnungs- in eine Schließstellung und umgekehrt je nach Drehrichtung des Ringkörpers 4, wobei der Mitnahmestift 6 innerhalb einer radialen im Schwenkschieber 7 eingearbeiteten Führungsbahn geführt ist, wobei der Stift 6 im Ringkörper 3 oberseitig in einem kreisbogenförmigen Freilauf 5 entlangläuft.

Der Ringkörper 4 weist oberseitig einen koaxialen hohlzylindrischen Andockaufsatz 11 auf, in den eine Zapfpistole 12 zur Betankung eintauchen kann. Im Umfang des Andockaufsatzes 11 sind von außen eingearbeitete radial ausgerichtete, als Sackbohrungen ausgebildete Führungsbohrungen 74 angeordnet, in denen ein hohlzylindrischer Kolben 13 geführt ist. Am Kolben 13 stützt sich in dessen Höhlung 14 stirnseitig einenends eine Vorspannfeder 15 ab, die anderenends an einem Schraubverschluß 16 abgestützt ist, der die Führungsbohrung 74 verschließt.

Auf federabgewandter Seite ist am Kolben 13 ein Bolzen 17 mit abgerundetem Kopf am innenumfangseitigen Ende 73 angeformt, der durch eine Öffnung 18 in der Stirnseite 19 der Führungsbohrung 74 hindurch in den vom Innenumfang des Andockaufsatzes 11 begrenzten Ringraum 20 hineinragt. Der Kolben 13 liegt in unbetätigten Zustand des Bolzens 17 an der Stirnseite 19 der Führungsbohrung 74 durch die Vorspannfeder 15 angepreßt an. Der Bolzen 17 stellt ein radial verstellbares Formschlußelement des als Andockpartner für die Zapfpistole 12 wirkenden Andockaufsatzes 11 dar.

Das Gegenformschlußelement bildet eine umlaufende Außenverzahnung 21, die am austrittsseitigen Ende 22 der Zapfpistole 12 umfänglich ausgebildet ist. In die Verzahnung 21 ist eine kerbenförmige umlaufende Ringnut 23 eingearbeitet, die in den Verzahnungslückengrund 30 eindringt. Die Verzahnung 21 weist stirnseitig eine Anschrägung 24 auf.

In der Andockbewegung taucht die Zapfpistole 12 mit ihrer Verzahnung 21 in den Ringraum 20 des Andockaufsatzes 11 mit Spiel ein, wobei sie mit der Anschrägung 24 entgegen der Federkraft der Vorspannfeder 15 die Bolzen 17 in Richtung der Führungsbohrung 74 drückt. Einer der Bolzen 17 rastet jedoch während der Eintauchphase in der Regel in eine der Verzahnungslücken 25 ein. Liegt die Verzahnung 21 stirnseitig am Ringkörper 4 an dessen Oberseite an, wird die Axialbewegung der Zapfpistole 12 gestoppt. In dieser Lage erst rasten sämtliche Bolzen 17 in die Ringnut 23 ein, wobei nun die Zapfpistole 12 aufgrund der als Anschläge wirkenden oberen und unteren Flanken 26,27 der Ringnut 23 axial am Andockaufsatz 11 verriegelt ist. Die Verriegelung der Zapfpistole 12 in Umfangsrichtung wird von den Flanken 28,29 der Verzahnungslücke 25 erbracht, in der ein Bolzen 17 eingerastet ist.

Insgesamt ist die Art der Verriegelung deswegen so günstig, weil sie in einfacher Weise in der Andockbewegung selbstätig erfolgt. Für den Fall, in dem keiner Bolzen 17 in eine Verzahnungslücke 25 der Verzahnung 21 eingerastet ist, wird die Zapfpistole 12 um wenige Winkelgrade verdreht, bis zumindest einer der Bolzen 17 in eine Lücke 25 einrastet. Dabei ist für ein Einrasten nach einer geringen Verdrehung wesentlich, daß die Anzahl der Verzahnungslücken 25 ein Vielfaches der Bolzenanzahl - im Rahmen der technischen Machbarkeit - beträgt. Durch die Verriegelung in Umfangsrichtung kann der Schwenkschieber 7 über einfaches Verdrehen der Zapfpistole 12 geöffnet bzw. geschlossen werden.

Die Flanken 26,27 der Ringnut 23 sind kreissegmentartig ausgebildet, können jedoch auch angeschrägt verlaufen, so daß für die Zapfpistole 12 zwar am Bolzen 17 ein axialer Halt gegen Schaukelbewegungen des Fahrzeuges gegeben, jedoch ein Herausgleiten aus dem Andockaufsatz 11 bei einem Notabdockmanöver möglich ist.

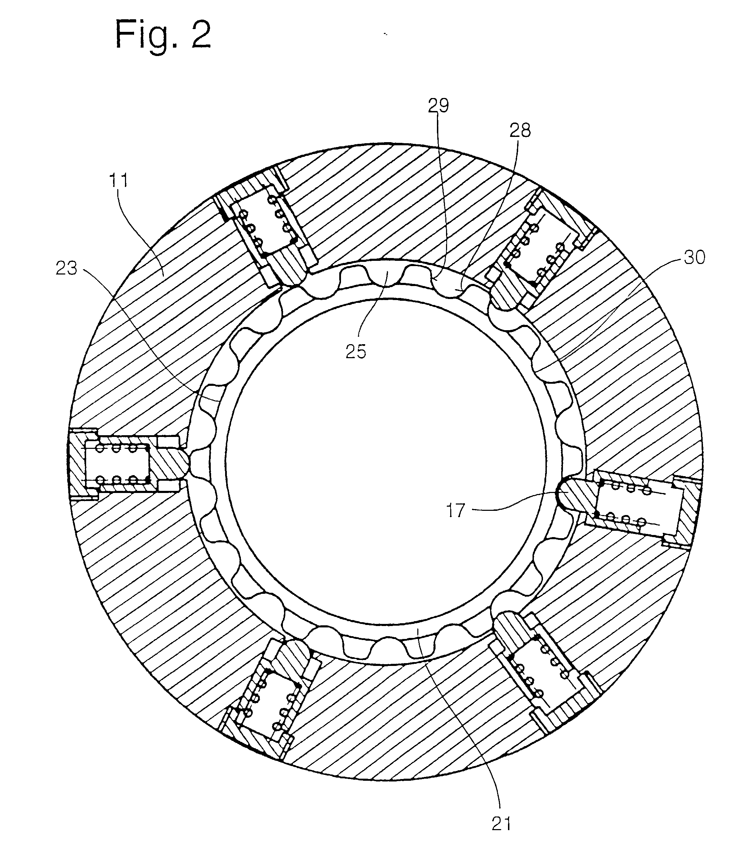

Um ein Nichtverrasten aller Bolzen 17 nahezu auszuschließen und um eine zusätzliche Verdrehung zur Einnahme einer Raststellung eines Bolzens 17 in eine Verzahnungslücke 25 im wesentlichen zu vermeiden und somit keine Torsionen der Zapfpistole 12 und deren angeschlossenen Kraftstoffschläuche zu erhalten, ist es günstig die Bolzen 17 am Umfang des Andockaufsatzes 11 unregelmäßig verteilt anzuordnen, wie es aus Fig. 2 ersichtlich ist. Hierbei rastet zumindest nach einer Drehung von höchstens dem n-ten Teil der Verzahnungsteilung ein Bolzen 17 in einer Verzahnungslücke 25 ein, wenn bei der Anordnung von n-Bolzen 17 der Winkelabstand zwischen (n-1)-Bolzen 17 regelmäßig zusätzlich zum n-ten Teil von 360° den n-ten Teil der Verzahnungsteilung beträgt. Der Winkelabstand bei einer sukzessiven Anordnung der Bolzen 17 in Umfangsrichtung - hier im Uhrzeigersinn - vom sechsten zum ersten Bolzen 17 beträgt die Differenz zwischen dem n-ten Teil der Summe von Verzahnungsteilung und 360° und der Verzahnungsteilung. Die Anzahl der in Verzahnungslücken 25 einrastenden Bolzen 17 kann dadurch erhöht werden, daß jedem der schon angeordneten Bolzen 17 zumindest ein weiterer Bolzen 17 zugeordnet wird, der dann von der Lage des angeordneten Bolzens 17 um ein Vielfaches der Verzahnungsteilung in Umfangsrichtung versetzt angeordnet wird.

Es ist im übrigen denkbar, in einer konstruktiv vereinfachten Ausführung anstelle der Bolzen 17 am Innenumfang des Andockaufsatzes 11 biegeelastische Bleche mit Noppen anzubringen, die in den Ringraum 20 radial hineinragen und entsprechend der Bolzen 17 in den Verzahnungslücken 25 aufgenommen werden können. Desweiteren ist es denkbar, daß die Bolzen 17 an der Zapfpistole 12 und die Verzahnung 21 als Innenverzahnung am Innenumfang des Andockaufsatzes 11 angeordnet ist, wobei die Anschrägung 24 am Andockaufsatz 11 stirnseitig und die Ringnut 23 im Umfang des Andockaufsatzes 11 bodennah ausgebildet ist.

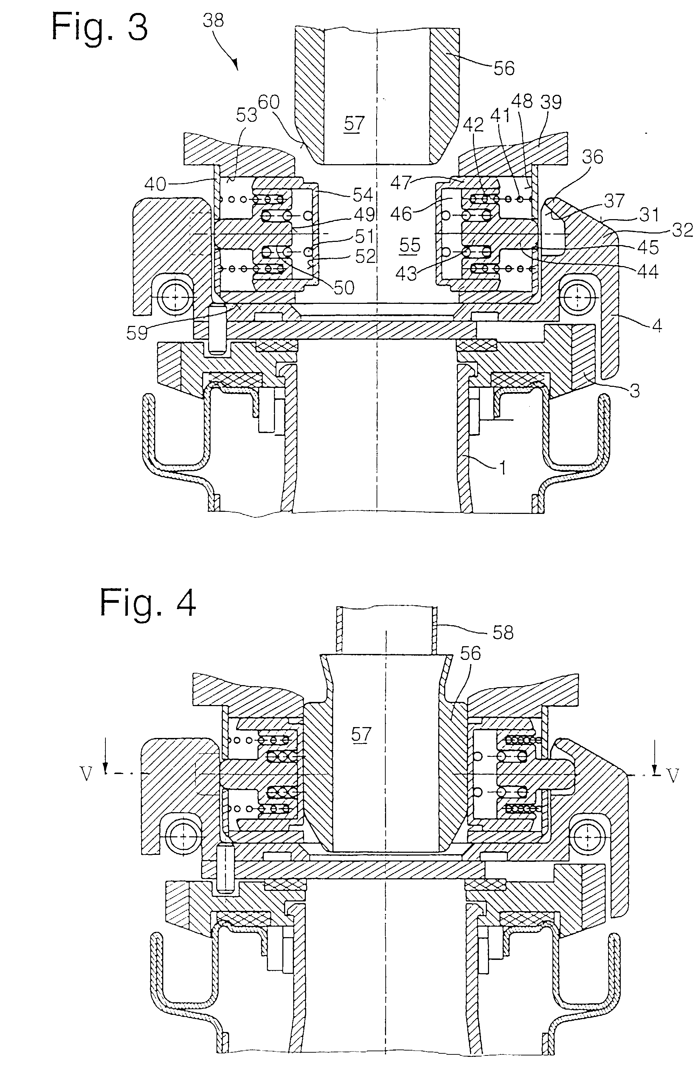

In Fig. 3 ist ein zweites Ausführungsbeispiel der Erfindung dargestellt. Hierbei ist an der Stirnseite 31 des Andockaufsatzes 32 eine regelmäßige koaxial zum Einfüllstutzen 1 verlaufende Innenverzahnung 33 mit einer Vielzahl von Zähnen 34 (hier: 20) ausgebildet. Die Lücken 35 der Innenverzahnung 33 werden von am oberen Ende der Lücken 35 angeordnete, nach innen vorspringende Nasen 36 axial nach oben hin abgedeckt, wobei die der jeweiligen Lücke 35 zugewandte Seite 37 der Nase 36 nach oben hin angeschrägt ist, so daß zwar ein axial verriegelnd wirkendes Einrasten in der Verzahnung 33 gesichert, jedoch ein Notabdocken der Zapfpistole 38 möglich ist, die nach Überwinden einer bestimmten Haltekraft aus dem Andockaufsatz 32 herausgleitet.

Auf das in den Andockaufsatz 32 eintauchende Ende 39 der Zapfpistole 38, im folgenden "Endeffektor" genannt, ist eine zylindrische Hülse 40 aufgesteckt und befestigt, an der innenseitig eine radial gerichtet wirkende Vorspannfeder 41 befestigt ist, die ihrerseits anderenends in einer ringförmigen Aussparung 42 eines Stempels 43 festgelegt ist. Der Stempel 43 ist zentrisch mit einem radial nach außen abstehenden Bolzen 44 mit abgerundetem Kopf versehen, welcher in unverrasteter Stellung der Zapfpistole 38 am Andockaufsatz 32 bündig mit einer in der Hülse 40 vorgesehenen Öffnung 45 abschließt, die so bemessen ist, daß der Bolzen 44 in ihr mit Spiel gelegen ist und in ihr führbar ist.

Der Stempel 43 ist in einer radial ausgerichteten Höhlung 46 eines Hohlkolbens 47 mit Öffnung zur Hülseninnenseite 48 hin geführt und weist auf seiner der Innenseite 48 der Hülse 40 abgewandten Seite 49 eine weitere ringförmige Aussparung 50 auf, in der eine Spreizfeder 51 einenends festgelegt ist. Die Spreizfeder 51 stützt sich anderenends an der dem Stempel 43 zugewandten Innenseite 52 des Hohlkolbens 47 ab. Der Hohlkolben 47, die Spreizfeder 51 und der Stempel 43 bilden das verstellbare Formschlußelement. Der Hohlkolben 47 ist seinerseits in einer radial ausgerichteten Führungsbohrung 53 des Endeffektors 39 geführt, wobei der Hohlkolben 47 mit seinem zur hülsenabgewandten Seite 49 des Stempels 43 parallelen Wandungsabschnitt 54 durch die Spreizfeder 51 beaufschlagt in den zentralen Durchlaß 55 des Endeffektors hineinragt.

Die Zapfpistole 38 weist einen mechanisch oder fluidisch innerhalb des Durchlasses 55 axial führbaren zylindrischen Druckstempel 56 auf, der stirnseitig angeschrägt ist und eine zentrische Durchführung 57 für ein Füllrohr 58 der Zapfpistole 38 aufweist (Fig. 4). Das Andocken erfolgt zuerst durch Eintauchen des Endeffektors 39 in den Andockaufsatz 32, bis die Stirnseite 59 des Endeffektors 39 am Ringkörper 4 oberseitig zu liegen kommt, wonach die axiale Bewegung der Zapfpistole 38 zum Einfüllstutzen 1 hin gestoppt wird.

Danach wird der Druckstempel 56 abgesenkt, der mit seiner Anschrägung 60 den Hohlkolben 47 an dessen Wandungsabschnitt 54 beaufschlagt und ihn in radialer Richtung in die Führungsbohrung 53 hinein zur Hülse 40 hin drückt. Die Spreizfeder 51 besitzt eine höhere Federkraft als die Vorspannfeder 41, so daß über die Betätigung des Kolbens 47 durch den Druckstempel 56 die Vorspannfeder 41 zusammengedrückt wird und der am Stempel 43 angeordnete Bolzen 44 durch die Öffnung 45 der Hülse 40 hindurch gedrückt wird. Das verstellbare Formschlußelement ist damit vom Druckstempel 56 zwangsbetätigt.

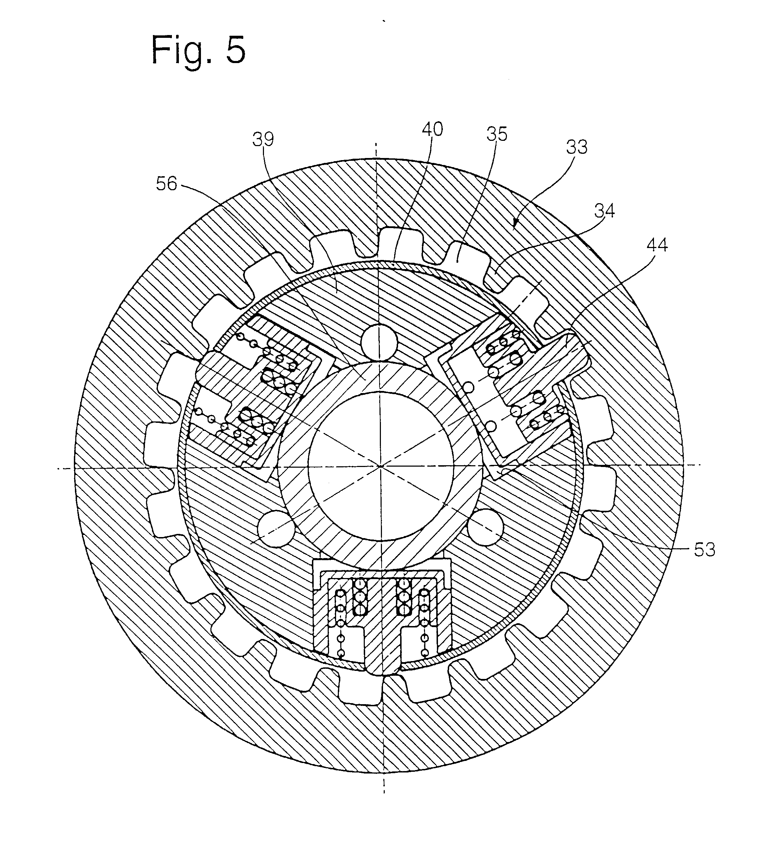

Trifft der Bolzen 44 auf einen Zahnkopf 61 der Innenverzahnung 33, wird der Bolzen 44 entgegen der Federkraft der Spreizfeder 51 in den Hohlkolben 47 hineingedrückt, so daß keine Verzwängungen beim Andocken auftreten (Fig.4 und Fig. 5). Das verstellbare Formschlußelement ist somit teleskopartig zusammendrückbar. Liegt der Bolzen 44 einer Lücke 35 gegenüber, so kann er in diese einrasten. Der Druckstempel 56 verbleibt während des Andockens in dieser Lage, so daß die Zapfpistole 38 am Andockaufsatz 32 zwangsverriegelt ist. Die Verriegelung wirkt durch das Eingreifen eines Bolzens 44 in eine Lücke 35 in Umfangsrichtung und durch die Nase 36 über der Lücke 35 auch in axialer Richtung. Die Nase 36 kann im übrigen auch umlaufend ausgestaltet sein.

Trifft keiner der drei symmetrisch in Umfangsrichtung angeordneten Bolzen 44 eine Lücke 35 wird der Endeffektor 39 der Zapfpistole 38 oder die Zapfpistole 38 als ganzes gedreht, wobei durch eine geringen Teilungsmodul der Innenverzahnung 33 nur kleine Verdrehungen nötig sind, bis der Bolzen 44 durch die Spreizfeder 51 und die Vorspannfeder 41 radial nach außen beaufschlagt einrastet.

In Verriegelungsstellung kann dann der Schwenkschieber 7 durch eine Drehung der Zapfpistole 38 zur Betankung geöffnet werden. Nach Einnahme der Raststellung wird das Füllrohr 58 der Zapfpistole 38 durch die Durchführung 57 des Druckstempel 56 hindurch und zum Betanken in den Einfüllstutzen 1 hinein geführt. Denkbar ist auch, anstatt des Druckstempel 56 das Füllrohr 58 selbst als Betätigungsorgan für das verstellbare Formschlußelement zu verwenden, wobei das Füllrohr 58 entsprechend dem Druckstempel 56 stirnseitig angeschrägt ist.

Nach dem Betanken wird der Druckstempel 56 angehoben, worauf die Federn 41 und 51 sich entspannen und der Bolzen 44 in den Endeffektor 39 eintaucht und damit die Umfangs- und Axialverriegelung aufgehoben ist.

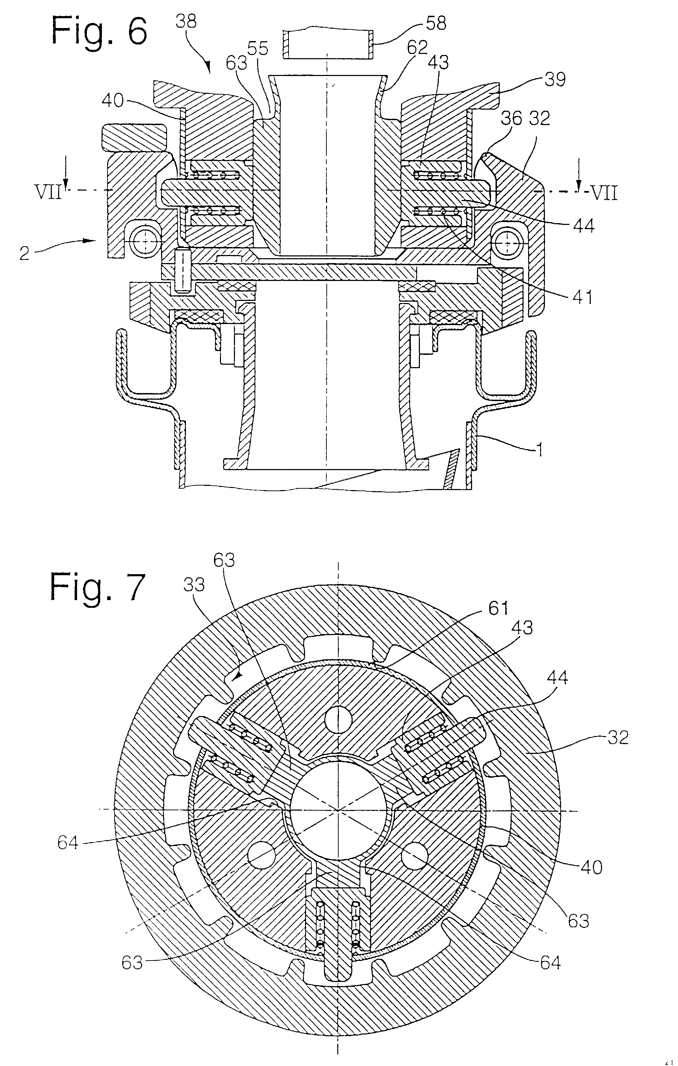

Ein weiteres, konstruktiv vereinfachtes Ausführungsbeispiel der Erfindung gegenüber dem aus Fig. 3 bis 5 ist in Fig. 6 und 7 dargestellt, wobei lediglich die Andocklage gezeigt ist. Von dem vorgenannten Ausführungsbeispiel abweichend entfällt hierbei die Spreizfeder 51 sowie der Hohlkolben 47.

Das verstellbare Formschlußelement wird allein von dem Stempel 43 und dem Bolzen 44 gebildet, die von der Vorspannfeder 41 so weit von der Hülse 40 weg gedrängt werden, daß der Stempel 43 in den zentralen Durchlaß 55 hineinragt. Der Stempel 43 wird in der Andocklage direkt von einem Druckstempel 62 betätigt, der hohlzylindrisch ausgebildet ist, jedoch an seiner Mantelfläche drei radial abstehende Zähne 63 aufweist, die entsprechend der in Umfangsrichtung symmetrischen Anordnung der verstellbaren Formschlußelemente angeordnet sind. Der Druckstempel 62 ist dazu nicht nur in dem zentralen Durchlaß 55, sondern auch mit seinen Zähnen 63 in axial verlaufenden Führungsnuten 64 geführt, welche die Führungsbohrungen 53 rückseitig anschneiden.

Die Zähne 63 sind stirnseitig angeschrägt, wodurch der Stempel 43 beim Absenken des Druckstempels 62 entgegen der Federkraft der Feder 41 in radialer Richtung nach außen gedrückt wird. Um Verzwängungen der Zapfpistole 38 am Andockaufsatz 32 zu vermeiden, die entstehen können, wenn die Bolzen 44 auf Zahnköpfe treffen, wird die Innenverzahnung 33 mit einer Lückenbreite ausgebildet, die ein Vielfaches der Bolzenbreite beträgt, so daß die Wahrscheinlichkeit eines Auftreffens eines Bolzens 44 auf einen Zahnkopf minimiert wird.

Desweiteren ist die Lage des Andockaufsatzes 32 anhand einer definierten Verschraubungsstellung des Verschlußdeckels 2 am Einfüllstutzen 1 vorgegeben, wobei diese Stellung im Tankroboter einprogrammiert ist. Dadurch fährt der Roboter nur mit geringen Toleranzen in der Winkelabweichung der relativen Umfangsstellung von Zapfpistole 38 zu Andockaufsatz 32 behaftet an diesen heran und taucht mit der Zapfpistole 38 in ihn ein. Die Toleranzen werden dabei von der vergrößerten Lückenbreite der Innenverzahnung 33 kompensiert.

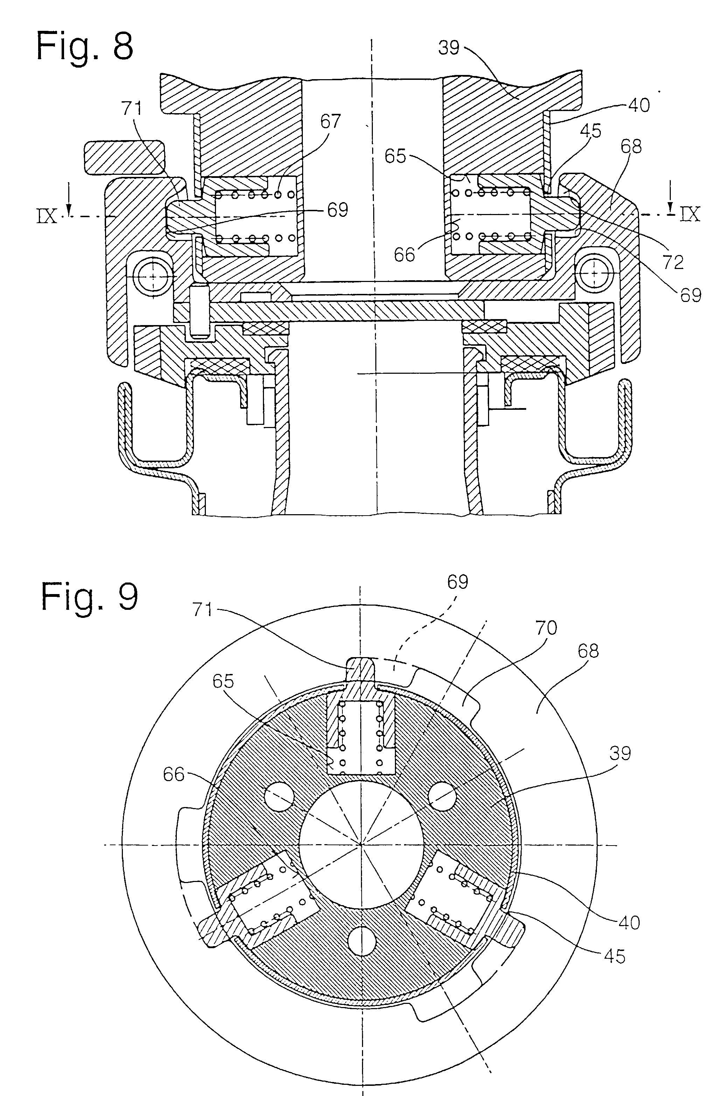

Ein weiteres Ausführungsbeispiel ist in Fig. 8 und 9 dagestellt, wobei die Betankungsanordnung in Andocklage gezeigt wird. Von Fig. 3-5 abweichend weist der Endeffektor 39 drei über den Umfang symmetrisch verteilt angeordnete, vom Umfang aus eingearbeitete und als Sackbohrung ausgebildete Führungsbohrungen 65 auf, in denen jeweils ein verstellbares Formschlußelement gemäß der Ausbildung aus Fig. 1 und 2 geführt und durch eine am Bohrungsgrund 66 sich abstützende Vorspannfeder 67 durch eine Öffnung 45 in der Hülse 40 hindurchgedrückt wird.

Der Andockaufsatz 68 weist demgegenüber anstelle einer Innenverzahnung 33 nach Art eines Bajonettverschlußes ausgebildete in Umfangsrichtung verlaufende Führungsnuten 69 auf, deren Öffnungen 70 an ihm stirnseitig angeordnet sind. Auch hier ist es für ein erfolgreiches Andocken notwendig, daß die Stellung des Andockaufsatzes 68 in Umfangsrichtung vorgegeben und im Betankungsroboter einprogrammiert ist, so daß die Bolzen 71 in die Öffnungen 70, die analog des Zweckes der Lückenbreite der Innenverzahnung 33 aus Fig. 7 und 8 breit angelegt sind, unbehindert eintauchen können. Nach einer kurzen Drehung der Zapfpistole 38 rasten die Bolzen 71 in die in Umfangsrichtung wirkenden Anschlagsstellung ein.

Die obere Flanke 72 der Führungsnuten 69 verläuft nach oben hin angeschrägt. Bei einem Schnellabdocken können dadurch die Bolzen 71 aus den Führungsnuten 69 herausgleiten, wobei die Bolzen 71 in ihre Führungsbohrungen 65 zurückgedrückt werden. Die Federn 67 sind bei dieser Variante somit nur für das Not- bzw. Schnellabdocken erforderlich. Die Variante zeigt eine konstruktiv einfache Betankungsanordnung, bei der die Verriegelung in axialer und in Umfangsrichtung selbsttätig mit der Drehung der Zapfpistole 38 erfolgt.

## Patentansprüche

1. Betankungsanordnung zum roboterfähigen Betanken eines Fahrzeuges mit Kraftstoff, mit einer Zapfpistole (12;38) und einem Tankeinfüllstutzen (1), an dem einfüllseitig ein zylindrischer, mit einem zentralen Durchlaß versehener Andockaufsatz (11;32;68) angebracht ist, in dessen oberem um die Symmetrieachse für den Öffnungs- und Schließvorgang des Tankverschlußes verdrehbarem Abschnitt die Zapfpistole mit ihrem austrittseitigen Ende unter Bildung einer formschlüssigen Verbindung von Zapfpistole und Andockaufsatz andockbar ist, wobei an deren Umfang verteilt angeordnete, axial verlaufende Formschlußelemente nach Art von Zähnen eines Nabenprofiles im betankungsbereiten Zustand der Zapfpistole formschlüssig ineinandergreifen,
**dadurch gekennzeichnet,**
daß die Formschlußelemente der beiden Andockpartner (11,12;32,38;68,38) ineinander in einer axial und in Umfangsrichtung verriegelnd wirkenden Raststellung einrastbar sind, wobei die Formschlußelemente (17;43,47,51;43;71) des einen Andockpartners (11, 38) radial beweglich geführt und entgegen der Kraft einer Vorspannfeder (15;41;67) nachgiebig in einer Arbeitsposition gespannt sind und wobei die Formschlußelemente (21;33;69) des anderen Andockpartners (12;32;68) starr angeordnet sind, und daß die beiden Andockpartner (11,12;32,38;68,38) derart ausgebildet sind, daß die radial verschiebbaren Formschlußelemente mittels einer axial zum Andockaufsatz (11;32;68) gerichteten Kraft betätigbar sind (Fig. 1,2;3-5;6,7;8,9).

2. Anordnung nach Anspruch 1,
**dadurch gekennzeichnet,**
daß die radial beweglichen Formschlußelemente über eine stirnseitige Anschrägung (24;60;72) der starr angeordneten Formschlußelemente (21,33,69) des anderen Andockpartners durch die An- und Abdockbewegung der Zapfpistole (12;38) selbsttätig betätigbar sind.

3. Anordnung nach Anspruch 1,
**dadurch gekennzeichnet,**
daß die radial beweglichen Formschlußelemente (43,47,51;43;71) an der Zapfpistole (38) austrittseitig geführt und von einem innerhalb der Zapfpistole (38) angeordneten, axial in dieser beweglichen Betätigungsorgan (56;62) von innen zwangsweise radial nach außen verschiebbar sind.

4. Anordnung nach Anspruch 3,
**dadurch gekennzeichnet,**
daß das Betätigungsorgan ein mechanisch oder fluidisch verstellbarer Druckstempel (56;62) ist, der stirnseitig angeschrägt ist und eine zentrische Durchführung (57) für ein Füllrohr (58) der Zapfpistole (38) aufweist.

5. Anordnung nach Anspruch 3,
**dadurch gekennzeichnet,**
daß das Betätigungsorgan ein in der Zapfpistole (38) verschiebebeweglich angeordnetes Füllrohr (58) ist, das austrittsseitig angeschrägt ausgebildet ist.

6. Anordnung nach Anspruch 1,
**dadurch gekennzeichnet,**
daß die radial verstellbaren Formschlußelemente des einen Andockpartners (11;38) als Bolzen mit verrundetem Kopf an deren einrastseitigen Enden (73) ausgebildet sind.

7. Anordnung nach Anspruch 1,
**dadurch gekennzeichnet,**
daß die Anzahl der starr angeordneten Formschlußelemente (21;33) ein Vielfaches von der Anzahl der verstellbaren Formschlußelemente (17;43,47,51;43) beträgt (Fig. 1,2;3-5;6,7).

8. Anordnung nach Anspruch 1,
**dadurch gekennzeichnet,**
daß die starr angeordneten Forschlußelemente (21;33) gemeinsam durch die Lücken (35) einer umlaufenden Verzahnung gebildet sind.

9. Anordnung nach Anspruch 8,
**dadurch gekennzeichnet,**
daß die verstellbaren Formschlußelemente (17) umfänglich unregelmäßig verteilt sind, wobei bei der Anordnung von n verstellbaren Formschlußelementen (17) der Winkelabstand zwischen (n-1)-Elementen (17) regelmäßig zusätzlich zum n-ten Teil von 360° den n-ten Teil der Verzahnungsteilung beträgt und wobei der Winkelabstand bei einer sukzessiven Anordnung der verstellbaren Formschlußelemente (17) in Umfangsrichtung vom zuletzt zum zuerst angeordneten verstellbaren Formschlußelement (17) die Differenz zwischen dem n-ten Teil der Summe von Verzahnungsteilung und 360° und der Verzahnungsteilung beträgt (Fig. 1, 2).

10. Anordnung nach Anspruch 8,
**dadurch gekennzeichnet,**
daß in die Verzahnung (21) eine umlaufende kerbenförmige Ringnut (23) eingearbeitet ist, in die die beweglichen Formschlußelemente (17) einrastbar sind und (17) die Zapfpistole (12) axial verriegeln, wobei die Nutflanken (26,27) und die Ober- und Unterseiten der Formschlußelemente (17) Anschläge aneinander bilden.

11. Anordnung nach Anspruch 10,
**dadurch gekennzeichnet,**
daß zumindest die Flanke (26) der Nut (23) angeschrägt ist, die den Teil des nach oben wirkenden axialen Anschlages für die Zapfpistole (12) bildet.

12. Anordnung nach Anspruch 1,
**dadurch gekennzeichnet,**
daß an den starr angeordneten Formschlußelementen (33) dort stirnseitig eine radial abstehende, angeschrägte Nase (36) vorgesehen ist, wo diese mit dem jeweiligen eingerasteten verstellbaren Formschlußelement (43,47;43) einen nach oben wirkenden axialen Anschlag für die Zapfpistole (38) bildet (Fig. 3-5 ; 6,7).

13. Anordnung nach Anspruch 9,
**dadurch gekennzeichnet,**
daß jedem der angeordneten verstellbaren Formschlußelemente (17) zumindest ein weiteres verstellbares Formschlußelement (17) zugeordnet ist, das von ihm um ein Vielfaches der Verzahnungsteilung in Umfangsrichtung versetzt angeordnet ist.

14. Anordnung nach Anspruch 3,
**dadurch gekennzeichnet,**
daß das verstellbare Formschlußelement aus einem Hohlkolben (47), einem Stempel (43), der in der Höhlung (46) des Hohlkolbens (47) in radialer Richtung geführt und mit einem radial nach außen abstehenden Bolzen (44) versehen ist, und einer zwischen dem Hohlkolben (47) innenseitig und dem Stempel (43) stirnseitig auf bolzenabgewandter Seite (49) abgestützten Spreizfeder (51) besteht, die den Hohlkolben (47) in den zentralen Durchlaß (55) der Zapfpistole (38) so weit hineindrängt, daß er vom Betätigungsorgan (56,62) betätigbar ist, so daß das Formschlußelement (43,47,51) in Zusammenarbeit der Spreizfeder (51) mit der zu dieser koaxial hülsennäheren Vorspannfeder (41) teleskopartig zusammendrückbar ist (Fig. 3-5).

15. Anordnung nach Anspruch 3,
**dadurch gekennzeichnet,**
daß die Lückenbreite der am Andockaufsatz (32) angebrachten, die starr angeordneten Formschlußelemente bildenden Innenverzahnung (33) ein Vielfaches der Breite des zur Verrastung wirksamen Teils des verstellbaren Formschlußelementes (43) beträgt (Fig. 6,7).

16. Anordnung nach Anspruch 1,
**dadurch gekennzeichnet,**
daß die starr angeordneten Formschlußelemente Führungsnuten (69) nach Art eines Bajonettverschlußes sind, deren Öffnungen (70) an einem der Andockpartner (1,12,38) stirnseitig angeordnet sind (Fig. 8,9).

## Claims

1. A fuelling arrangement for the robot-operated fuelling of a motor vehicle with a petrol hose nozzle (12; 38) and a tank filler connection piece (1), to which a cylindrical docking attachment (11; 32; 68) with a central passage is fitted on the filler side, in the upper section of which, which can be rotated about the axis of symmetry for the opening and closing process of the tank cap, can be docked the outlet end of the petrol hose nozzle thus forming a positive connection between the petrol hose nozzle and the docking attachment, whereby axial running positive-locking elements distributed around its circumference in the manner of the teeth of a hub section engage with each other positively when the petrol hose nozzle is ready for fuelling,
**characterised in that**
the positive-locking elements of the two docking partners (11, 12; 32, 38; 68, 38) can engage with each other in an engaged position providing both axial and circumferential locking, whereby the positive-locking elements (17; 43, 47, 51; 43; 71) of one docking partner (11, 38) are moved radially and held flexibly in a working position against the force of a pre-tensioned spring (15; 41; 67) and whereby the positive-locking elements (21; 33; 69) of the other docking partner (12; 32; 68) are positioned rigidly, and that both docking partners (11, 12; 32, 38; 68, 38) are designed in such a way that the radially movable positive-locking elements can be actuated by means of a force oriented axially in relation to the docking attachment (11; 32; 68) (Figs. 1, 2; 3-5; 6, 7; 8, 9).

2. An arrangement in accordance with Claim 1,
**characterised in that**
the radially movable positive-locking elements can be actuated automatically by an angled section (24; 60; 72) at the front of the rigidly positioned positive-locking elements (21, 33, 69) of the other docking partner by means of the docking and undocking movements of the petrol hose nozzle (12; 38).

3. An arrangement in accordance with Claim 1,
**characterised in that**
the radially movable positive-locking elements (43, 47, 51; 43; 71) run on the outlet side of the petrol hose nozzle (38) and can be forced radially outwards from the inside by means of an actuating organ (56; 62) positioned inside the petrol hose nozzle (38) in such a way that it can move axially within it.

4. An arrangement in accordance with Claim 3,
**characterised in that**
the actuating organ is a mechanically or fluidally adjustable pressure plunger (56; 62) the front end of which is angled and which has a central passage (57) for a filler hose (58) on the petrol hose nozzle (38).

5. An arrangement in accordance with Claim 3,
**characterised in that**
the actuating organ is a filler hose (58) with an angled front section which is positioned in such a manner that it can slide inside the petrol hose nozzle (38).

6. An arrangement in accordance with Claim 1,
**characterised in that**
the radially adjustable positive-locking elements of one docking partner (11; 38) are designed as bolts which have rounded heads on the engagement ends (73).

7. An arrangement in accordance with Claim 1,
**characterised in that**
the number of rigidly positioned positive-locking elements (21 ; 33) is a multiple of the number of adjustable positive-locking elements (17; 43, 47, 51; 43) (Figs. 1, 2; 3-5; 6, 7).

8. An arrangement in accordance with Claim 1,
**characterised in that**
the rigidly positioned positive-locking elements (21; 33) are formed jointly by the gaps (35) in circumferential toothing.

9. An arrangement in accordance with Claim 8,
**characterised in that**
the adjustable positive-locking elements (17) are distributed irregularly around the circumference, whereby in the arrangement of n adjustable positive-locking elements (17) the angle between (n-1) elements (17) is regularly the n-th part of the toothing spacing plus the n-th part of 360° and whereby the angle in the case of the successive arrangement of the adjustable positive-locking elements (17) circumferentially from the last to the first positioned adjustable positive-locking element (17) equals the difference between the n-th part of the sum of the toothing spacing and 360° and the toothing spacing (Fig. 1, 2).

10. An arrangement in accordance with Claim 8,
**characterised in that**
worked into the toothing is a circumferential notch-shaped ring groove (23) in which the movable positive-locking elements (17) can engage and lock axially, whereby the edges of the groove (26, 27) and the top and bottom of the positive-locking elements (17) form stops against one another.

11. An arrangement in accordance with Claim 10,
**characterised in that**
at least the edge (26) of the groove (23) which forms part of the upwardly acting axial stop for the petrol hose nozzle (12) is angled.

12. An arrangement in accordance with Claim 1,
**characterised in that**
a radially projecting angled carrier (36) is provided on the front end of the rigidly positioned positive-locking elements (33) where it forms an upward and downward working axial stop for the petrol hose nozzle (38) with the engaged adjustable positive-locking element (34, 47; 43).

13. An arrangement in accordance with Claim 9,
**characterised in that**
each of the adjustable positive-locking elements (17) has at least one further adjustable positive-locking element (17) which is positioned circumferentially offset from it by a multiple of the toothing spacing.

14. An arrangement in accordance with Claim 3,
**characterised in that**
the adjustable positive-locking element consists of a tubular piston (47), a plunger (43) which runs radially through the cavity (46) in the tubular piston (47) and is provided with a radially projecting bolt (44), and a bracing spring (51) supported between the inside of the tubular piston (47) and the front end of the plunger (43)on the side (49) facing away from the bolt, which forces the tubular piston (47) into the central passage (55) in the petrol hose nozzle (38) until it can be actuated by the actuating organ (56, 62) in such a manner that the positive-locking element (43, 47, 51) can be compressed telescopically in conjunction with the bracing spring (51) with the pre-tensioned spring (41) which is located coaxially nearer to the sleeve (Fig. 3-5).

15. An arrangement in accordance with Claim 3,
**characterised in that**
the width of the gaps in the internal teething (33) fitted to the docking attachment (32) forming the rigid positive-locking elements (43) is a multiple of the width of the part of the adjustable positive-locking element (1, 12, 38) which effects the locking (Figs. 6, 7).

16. An arrangement in accordance with Claim 1,
**characterised in that**
the rigid positive-locking elements are guide channels (69) in the manner of a bayonet fixing, the openings in which (7)) are positioned at the front of one of the docking partners (1, 12, 39 (Figs. 8, 9).

## Revendications

1. Dispositif de ravitaillement pour le ravitaillement robotisé d'un véhicule en carburant, avec un pistolet distributeur (12; 38) et une tubulure de remplissage de réservoir (1), sur laquelle, côté remplissage, est montée une garniture d'accostage (11; 32; 68) munie d'un passage central, garniture dans le tronçon supérieur, susceptible de tourner autour de l'axe de symétrie pour effectuer le processus d'ouverture et de fermeture de la fermeture de réservoir, de laquelle le pistolet distributeur est susceptible d'être accosté par son extrémité située côté sortie, en constituant une liaison à ajustement de forme entre le pistolet distributeur et la garniture d'accostage, des éléments de liaison à ajustement de forme, s'étendant axialement, répartis sur sa périphérie, s'engageant les uns dans les autres par une liaison à ajustement de forme, à la façon de dents d'un profil de moyeu, lorsque le pistolet distributeur est à l'état prêt au ravitaillement,
caractérisé en ce que les éléments de liaison à ajustement de forme des deux partenaires d'accostage (11, 12; 32, 38; 68, 38) sont encliquetables les uns dans les autres, en une position d'encliquetage agissant avec verrouillage axial et en direction périphérique, les éléments de liaison à ajustement de forme (17; 43, 47, 51; 43; 71) d'un premier partenaire d'accostage (11, 38) étant guidés de façon mobile radialement et serrés à l'encontre de la force d'un ressort de précontrainte (15; 41; 67) avec un déplacement pour passer en une position de travail, et les éléments de liaison à ajustement de forme (21; 33; 69) de l'autre partenaire d'accostage (12; 32; 68) étant disposés rigidement, et en ce que les deux partenaires de réaction (11, 12; 32, 38; 68, 38) sont réalisés de manière que les éléments de liaison à ajustement de forme, susceptibles d'être déplacés radialement, soient actionnables au moyen d'une force orientée axialement par rapport à la garniture d'accostage (11, 32, 68) (figures 1, 2; 3-5; 6,7; 8,9).,

2. Dispositif selon la revendication 1, caractérisé en ce que les éléments de liaison à ajustement de forme mobiles radialement sont actionnables automatiquement, par l'intermédiaire d'un biseautage (24; 60; 72) situé côté frontal, réalisé sur les éléments de liaison à ajustement de forme (21; 33; 62), disposés rigidement, de l'autre partenaire d'accostage, sous l'effet du déplacement d'accostage et de désaccostage du pistolet distributeur (12; 38).

3. Dispositif selon la revendication 1, caractérisé en ce que les éléments de liaison à ajustement de forme (43, 47, 51; 43, 71) mobiles radialement sont guidés côté sortie sur le pistolet distributeur (38) et sont déplaçables depuis l'intérieur, de façon forcée, radialement vers l'extérieur, par un organe d'actionnement (56: 62), disposé à l'intérieur du pistolet distributeur (38), mobile axialement dans celui-ci.

4. Dispositif selon la revendication 3, caractérisé en ce que l'organe d'actionnement est un poussoir de pressage (56; 62), réglable mécaniquement ou fluidiquement, biseauté du côté frontal, et présente un passage (57) central pour un tube de remplissage (58) du pistolet distributeur (38).

5. Dispositif selon la revendication 3, caractérisé en ce que l'organe d'actionnement est un tube de remplissage (58), disposé avec mobilité dans le pistolet distributeur (38), tube de remplissage réalisé avec un biseautage du côté sortie.

6. Dispositif selon la revendication 1, caractérisé en ce que les éléments de liaison à ajustement de forme réglables radialement d'un premier partenaire d'accostage (11; 38) sont réalisés sous la forme de boulons, à tête arrondie à leurs extrémités (73) situées côté encliquetage.

7. Dispositif selon la revendication 1, caractérisé en ce que le nombre des éléments de liaison à ajustement de forme (21; 33) disposés rigidement est un multiple du nombre des éléments de liaison à ajustement de forme réglables (17; 43; 47, 51; 43) (figures 1,2; 3-5; 6,7).

8. Dispositif selon la revendication 1, caractérisé en ce que les éléments de liaison à ajustement de forme (21; 33) disposés rigidement sont constitués conjointement par les entredents (35) d'une denture périphérique.

9. Dispositif selon la-revendication 8, caractérisé en ce que les éléments de liaison à ajustement de forme (17) réglables sont répartis irrégulièrement en périphérie, où, dans le cas d'agencement de n éléments de liaison à ajustement de forme (17) réglables, l'espace angulaire entre (n-1) éléments (17) vaut régulièrement, en plus de la énième partie de 360°, la énième partie du pas de la denture, et, en cas d'agencement successif des éléments de liaison à ajustement de forme (17) réglables, du dernier au premier élément de liaison à ajustement de forme (17) disposé en direction périphérique, l'espacement angulaire étant constitué de la différence entre la énième partie de la somme, du pas de la denture et de 360°, et le pas de la denture (figures 1 et 2).

10. Dispositif selon la revendication 8, caractérisé en ce que dans la denture (21) est aménagée une gorge annulaire (23) en forme d'entaille, faisant le pourtour, dans laquelle les éléments de liaison à ajustement de forme (17) mobiles sont encliquetables et verrouillent axialement le pistolet distributeur (12), les flancs de gorges (26, 27) et les faces supérieures et inférieures des éléments de liaison à ajustement de forme (17) constituant des butées les uns pour les autres.

11. Dispositif selon la revendication 10, caractérisé en ce qu'au moins le flanc (26) de la rainure (23) est biseauté, constituant la partie de la butée axiale agissant vers le haut pour le pistolet distributeur (12).

12. Dispositif selon la revendication 1, caractérisé en ce que sur les éléments de liaison à ajustement de forme (33) disposés rigidement est prévu à cet endroit, côté frontal, un ergot (36) biseauté, faisant saillie radialement, celui-ci constituant, avec l'élément de liaison à ajustement de forme (43, 47, 49) réglable, encliqueté, respectif, une butée axiale agissant vers le haut pour le pistolet distributeur (38) (figures 3-5; 6,7).

13. Dispositif selon la revendication 9, caractérisé en ce qu'à chacun des éléments de liaison à ajustement de forme (17) réglables ayant été disposés est associé au moins un autre élément de liaison à ajustement de forme (17) réglable qui est disposé de façon décalée de lui, le décalage étant d'un multiple du pas de la denture, en direction périphérique.

14. Dispositif selon la revendication 3, caractérisé en ce que l'élément de liaison à ajustement de forme réglable est constitué d'un piston creux (47), d'un poussoir (43) qui est guidé dans la direction radiale dans la cavité (46) du piston creux (47) et est muni d'un boulon (44) faisant saillie radialement vers l'extérieur, et d'un ressort d'écartement (51) prenant appui sur la face (49) opposée au boulon, entre le piston creux (47), intérieurement, et le poussoir (43), frontalement, le ressort poussant le piston creux (47) dans le passage central (55) du pistolet distributeur (38), à une profondeur faisant qu'il est actionnable par l'organe d'actionnement (56, 62), de manière que l'élément de liaison à ajustement de forme (43, 47, 51) soit compressible de façon télescopique, en faisant coopérer le ressort d'écartement (51) et le ressort de précontrainte (41) proche de la douille, coaxial à ce ressort (figures 3-5).

15. Dispositif selon la revendication 3, caractérisé en ce que la largeur de l'entredent de la denture intérieure montée sur la garniture d'accostage (32), constituant les éléments de liaison à ajustement de forme (33) disposés rigidement, est un multiple de la largeur de la partie, active pour l'encliquetage, de l'élément de liaison à ajustement de forme réglable (43) (figures 6,7).

16. Dispositif selon la revendication 1, caractérisé en ce que les éléments de liaison à ajustement de forme disposés rigidement sont des gorges de guidage (69) du genre d'une fermeture à baïonnette, dont les ouvertures (70) sont disposées frontalement sur l'un des partenaires d'accostage (1, 12, 38) (figures 8,9).
